# EUROPEAN PATENT SPECIFICATION

(11) **EP 4 187 227 B1**
(45) Date of publication and mention of the grant of the patent: **04.06.2025**
(21) Application number: 22201020.9
(22) Date of filing: 12.10.2022
(51) Int. Cl.: G01N 15/02, B07C 5/342, G01N 15/14

(54) **MEASURING INSTRUMENT AND METHOD OF USE**
MESSINSTRUMENT UND VERFAHREN ZUR VERWENDUNG
INSTRUMENT DE MESURE ET PROCÉDÉ D'UTILISATION

(30) Priority: 28.11.2021 DK PA202101128
(43) Date of publication of application: 31.05.2023
(73) Proprietor: SCANGRADING ApS, 4990 Sakskøbing (DK)
(72) Inventor: Egholm, Janus, 3520 Farum (DK)
(74) Representative: Holme Patent A/S

(56) References cited:
- EP-B1- 3 507 586
- JP-A- 2001 337 027
- US-A1- 2006 055 934

## Description

This invention concerns a measuring instrument for controlling at least the density of particles in a particle stream, especially small particles. The invention further concerns a measuring instrument for the analysis of small particles in a particle stream.

The measuring instrument is of the kind comprising
- a first dosing chute having a first receiving end and a first delivering end, which first dosing chute is attached to a first vibration generator,
- a second dosing chute having a second receiving end facing the first delivering end and a second delivering end, which second dosing chute is attached to a second vibration generator,
- the first dosing chute is placed higher up than the second dosing chute whereby the particles on the first dosing chute can be delivered in free fall from the first delivering end of the first dosing chute to the second dosing chute, and
- a first light source and a first camera.

In many industrial productions, e.g. in seed production, the quality of each particle is an important parameter in the production. As an example, the germination rate is dependent on the quality of each seed, and therefore an instrument and a method for controlling the seed quality before packing to the end user is needed. The quality of the seed includes e.g. an assessment if the kernel of an analyzed seed particle has a predetermined size, if the analyzed seed particle is of the right type or if it is a seed particle at all.

Checking of the particles is normally performed in two stages. First in the production by taking a sample and make a subjective assessment of what can be seen. The second check is made by taking, from production, samples at intervals, which samples later will be checked manually in a laboratory.

An in-line measuring instrument can be used directly in the production for analyzing of small particles and assessing the quality of said small particles. No automatic in-line measuring instrument for assessing the quality of particles, such as seeds, is however known, and to succeed with an in-line measuring instrument it is necessary to control the density of particles that is conveyed forward from the inlet to the measuring instrument to the analysis area of said measuring instrument. In the analysis area the particles must be separated into individual particles to make a proper analysis of each particle.

An existing measuring instrument for the measurement of particles in a bulk material sample is known from the applicant's European patent no. EP3507586 B1. This existing measuring instrument is generally intended for determining the size, or size distribution, of particles. This existing instrument has at least two built-in dosing chutes, and attached to each dosing chute is a controlled vibrator, which can vary the vibration intensity of a dosing chute, and thus varying the conveying speed of the particles at different vibration rates from the receiving end to the delivering end of each dosing chute.

The dosing chutes of this existing measuring instrument are positioned so that the last dosing chute is receiving the particles from the first dosing chute. Under the first dosing chute, light and camera equipment, which measures the particle density, is installed. Under the last dosing chute, light and camera equipment, which measures the size of the particles as well as the particle density, is installed. The cameras are connected to a computer unit that performs the analysis of the signals from each camera.

However for this camera-based method, for the quality analysis of particles to be accurate, it is important that the particles do not overlap while they pass the area in which the camera images are generated. In the case of overlapping particles, the image analysis will treat the overlapping particles as a single particle, and thus the quality analysis will become less correct.

In products, such as seed, it can be difficult to make an accurate separation before the analysis area, and if the particles are not separated, this causes inaccuracies in the computer-based methods of analysis, since the result is based on the image analysis of each seed.

Yet a problem with this existing measuring instrument is that the light sources and the cameras are arranged below the respective dosing chutes where space is limited and the flow of particles on the dosing chutes cannot be monitored, as only images of particles in free fall over the edge of the delivering end of the last dosing chute are acquired. US 2006/055934 A1 shows an instrument with a feedback control by image analysis having one camera on top of one chute.

In account of the above mentioned, the purpose of this invention is to make an improved measuring instrument that can separate the particles in a particle stream before they enter an analysis area.

In a further aspect is provided a measuring instrument by means of which the conveying speed of the particles on the dosing chutes can be controlled in an improved manner.

These and further aspects and purposes are achieved by a measuring instrument of the kind mentioned in the opening paragraph, which measuring instrument further comprises that
- the first light source and the first camera are placed above the first dosing chute and the second dosing chute, whereby the first camera covers an angle that corresponds to a field of view spanning the first receiving end to the second delivering end, and
- a computer unit is connected to the first vibration generator, the second vibration generator, and the first camera to control a dosing rate of the first dosing chute to the second dosing chute by means of signals from the first camera, wherein
- said signals are analyzed by the computer unit to vary the vibration intensity of the first and second vibration generators, whereby the particle stream that falls over a first edge of the first delivering end of the first dosing chute is controlled so that the particles in the second dosing chute are separated.

In the context of the present invention the second dosing chute is to be understood as the last dosing chute of the measuring instrument. The measuring instrument may however have more than two dosing chose and further intermediate dosing chutes can be provided between the first dosing chute and the second dosing chute.

The measuring instrument of the present invention thus has a built-in system for the separation of particles in a particle stream on consecutive dosing chutes so that the particles fall out of the last chute, thus out of the second dosing chute, as separated particles. Thus the particles can advantageously be separated when falling over the edge of the second dosing chute.

In contrast to the applicant's existing measuring instrument a first light source and a first camera are advantageously placed above both the first dosing chute and the second dosing chute.

So in accordance with the present invention a common light source is utilized to illuminate the particles on the consecutive first dosing chute and second dosing chute from above, so that images can be taken by the first camera along the entire flow path, and thereby facilitating monitoring the particle density at any position along the particle flow path along the dosing chutes. In response to signals representing the images from the first camera the computer unit controls the first and second vibration generators to adjust the particle density and/or particle distribution on any of the first and second dosing chutes.

High quality images can be obtained because the particles on the consecutive first dosing chute and second dosing chutes, and on any optional intermediate dosing chute, can be illuminated well by light from the first light source, which light is focusing directly on the particles on said consecutive dosing chutes. The higher above the dosing chutes the first light source and the first camera are placed the longer particle flow path the first light source and the first camera can cover. The position of said first camera and said first light source is very easy to adjust as there will be plenty of available space above the first dosing chute and the second dosing chute. The appropriate camera type and type of light source may be selected in accordance with the kind of particles to be observed on the dosing chutes, thus the kind of particles the quality of which is to be assessed. For some particle high-resolution cameras and high-contrast lighting works best. Cameras, such as wide field of view (WFOV) cameras, pan or tilt cameras, video cameras may be within the choice of the skilled person when choosing the proper camera for the measuring instrument. Low-contrast lighting and even no lighting may suffice for some measuring tasks.

A further advantages of placing the first light source and the first camera above the first dosing chute and the second dosing chutes is that images can be taken by the first camera, whereby detailed specific information about features of the particles is derivable from the images already when the particles are on the first dosing chute and the second dosing chute, respectively. It should in this respect be noted that the applicant's existing measuring instrument cannot take images from above the dosing chutes, only from below, and thus this measuring instrument cannot monitor the particle stream as it flows on the first dosing chute and on the second dosing chute.

The computer unit may be configured to receive signals from the first camera to determine the particle density on the first dosing chute and on the second dosing chute to control the respective first vibration generator and second vibration generator.

Accordingly, the measuring instrument of the present invention is able to ensure, to a much higher degree than conventional measuring instruments, that particles in a particle stream have indeed been separated into, second separated particle, preferably individual particles, when they leave the second delivering end of the second dosing chute, due to the feedback regulation of vibration of the first and second dosing chutes by the vibration generators under the control of the computer unit.

As already mentioned above a camera below the first dosing chute and below the second dosing chute is placed in a position in which it is unable to monitor the progress of the particles of a particle sample flowing on the dosing chutes before such particles fall out of a delivering end of the last dosing chute.

However by means of the measuring instrument according to the present invention the particles can be separated with very high reliability due to the vibration of the dosing chutes in response to observations by the first camera. The particles can then proceed as second separated particle, preferably individual particles, beyond the second delivering end of the second dosing chute for further analysis of e.g. size, quality, type, weight, and other parameters, which characteristics and parameters can be determined and/or calculated, and thus verified, with high precision using the computer unit.

For the further analysis the measuring instrument may in an embodiment comprise a second camera and a second light source placed below the second dosing chute.

In such a first embodiment of the measuring instrument according to the present invention the computer unit may be configured to receive signals from the second camera and to analyze particles in free fall from a second edge of a second delivering end of the second dosing chute through the optical path between the second camera and the second light source, thus to make the aforementioned further analysis of the particles.

In a second embodiment of the measuring instrument according to the present invention may instead of the second light source and the second camera comprise a conveyor belt, a third camera, and an upper third light source, wherein the third camera can be placed above the conveyor belt and a third light source can be placed over and/or under the conveyor belt for illuminating the particles that falls from the second delivering end of the second dosing chute onto the conveyor belt.

In such a second embodiment of the measuring instrument according to the present invention the computer unit may be configured to receive signals from the third camera to further analyze individual particles on the conveyor belt for same features, characteristics and parameters as described for the first embodiment.

A third embodiment of the measuring instrument according to the present invention may be a combination of the first embodiment and the second embodiment, whereby particles are analyzed both in free fall from the second delivering end and on the conveyor belt. The first analysis in free fall and the second analysis on the conveyor belt may be for different parameters of the separated particles, but the second analysis may also be a control analysis of the first analysis. Thus the computer unit may compare the first analysis to the second analysis, and e.g. make discriminations of some particle, calculate probabilities and deviation limits, etc.

To summarize: The dosing chutes, which can be two or more built-in dosing chutes each having their own vibration generator, are positioned so that the last dosing chute, which is the second dosing chute, is receiving the particles from the former chute. Over the first and second dosing chutes, light and camera equipment, which measures the particle density on said dosing chutes, is installed, and the result is a flow of separated particles falling over the delivering end of the last dosing chute. Depending on the analysis method, the separated particles can fall on a conveyor belt that takes the particles through an analysis area with light below or above, and camera above. Or if the particles are of a type that can be analyzed in free fall, a light source and camera can be located under the last dosing chute, so that the separated particles can be analyzed. The cameras are connected to a computer unit that performs the analysis of the signals from each camera.

For the analysis the computer unit may determine one or more of the parameters selected from the group comprising the particle size, the quality, the type, the color, the shape, the volume, and the weight of the individual particles of particles in a material sample.

The parameters of particles of a particle sample, especially the quality and the type, of particles may be determined by means of artificial intelligence program (AI) applied by the computer unit to the images taken by the second and/or the third cameras. The AI program may recognize e.g. morphology of the particles and then automatically group particles containing morphology. Using e.g. Neural Network the AI program then "learns" about the particles and can determine the type and quality.

The size, the color, and the shape, may be derived directly from the signal(s) from one or both of the second camera and the third camera, e.g. by comparative analysis of images taken by said cameras and images of a database accessible by the computer unit. The volume of a particle may be calculated by the computer unit based on analysis of the same images and determination of the dimensions of the particles. Information about the weight of the particles may require a weighing instrument associated with the measuring instrument, e.g. incorporated in the conveyor belt or arranged below the second delivering end of the second dosing chute. In the alternative the weight is established based on other parameters. If e.g. the type or the specific gravity of a particle has been established using AI the weight can be calculated based on obtained knowledge of appearance, size, volume and/or dimensions of the individual particle.

The first dosing chute may have a first slope from the first receiving end to the first delivering end, which first slope may be downward, horizontal, or upward; and/or the second dosing chute may have a second slope from the second receiving end to the second delivering end; which second slope may be downward, horizontal, or upward. The slope of any of the dosing chutes of the present invention may be adjustable.

For example the dosing chutes of the measuring instrument of the present invention may be placed in a horizontal plane at an arbitrary angle relative to each other, and so that the first delivering end of the first dosing chute provides material particles for the following dosing chute(s) until reaching the last chute, - the second dosing chute. The slope of said dosing chutes may be positive, zero or negative with respect to horizontal plane.

The first dosing chute and the second dosing chute may expediently be formed with sides that ensure that the particles do not leave the respective dosing chute before the particles fall over the first edge of the first delivering end of the first dosing chute and over the second edge of the second delivering end of the second dosing chute, respectively. Any intermediate dosing chute may be configured similarly as the first dosing chute and the second dosing chute to ensure that the particles maintain on the respective dosing chute(s) during transport towards the second delivering end of the second dosing chute, which transport is initiated and maintained by the vibration conferred to the respective dosing chutes by the vibration generators attached thereto. Optionally a bottom of a respective first dosing chute and/or second dosing chute can be concave, convex, or flat; same or different. The design of the dosing chutes may be selected in accordance with the kind and size of sample of particles.

The measuring instrument of the present invention may comprise more than two dosing chutes, wherein each dosing chute following the previous dosing chute is running at a higher or equal intensity than the dosing chute from which it is receiving particles.

Using the proper number of dosing chutes, it is possible to dose the particles from the first dosing chute to the last dosing chute of a measuring instrument such that the particles, during transport on the last chute, which above is defined as the second dosing chute, are separated as they fall over the delivering end of said last chute. Thus, it will be possible to achieve good accuracy in the result from the analysis, which result as an example can include the size, quality, type, and weight of a particle/the particles of a particle sample. In addition to this, a measuring instrument with the right number (two or more) of dosing chutes mounted with respective vibration generators enables a high level of reproducibility of the analysis of the particles of the particle stream.

A dosing chute may be fixed to a vibration generator and the vibration intensity on such a dosing chute can be controlled by the results from the image analysis made by the computer unit on the basis of signals from the first camera, and optionally from the second camera. So the vibration intensity of the first dosing chute and of the second chute of one or more dosing chutes can be controlled by said analysis, which analysis involves calculating the particle density on each dosing chute on the way to the second delivering end of the second dosing chute. Optionally the particles are passing one or more intermediate dosing chutes between the first dosing chute and the second dosing chute. If the measuring instrument has more than two dosing chutes, each following chute is running at a higher or equal vibration intensity than the one from which it is receiving particles. In alternative embodiments of measuring instruments according to the present invention the separation of the particles can also be adjusted by adjusting the slope of one or more of the consecutive chutes. A high slope may e.g. work well with a lower vibration intensity whereas a low slope may require a higher vibration intensity.

The last chute generally has a high vibration intensity in view of the rate of advance of the particles on the first dosing chute, and in this way the particles are separated when they fall over the delivering edge of the last dosing chute.

As the first dosing chute is being emptied, there will be fewer and fewer particles coming to the last dosing chute, and the particle density, which is detected by the computer unit in the images taken by the first camera, is getting smaller and smaller. Accordingly, the computer may receive signals from the first camera and gradually increase the vibration intensities of the first vibration generator and the second vibration generator, and any other intermediate vibration generator for intermediate dosing chutes of two or more dosing chutes, until said vibration generators finally ends at the maximum vibration intensity to empty all dosing chutes.

The first camera covers an angle that corresponds to a field of view spanning the first receiving end to the second delivering end, whereby all of two or more dosing chutes can be monitored by said first camera.

In all configurations and embodiments of the measuring instrument according to the present invention, there are one or more computer units that analyze the data provided in the signals, thus images, from the first, second and/or third cameras to control the vibration intensity of the two or more dosing chutes, and for the control and analysis of the particle sample as it flows along flow path defined by the dosing chutes, and optionally the conveyor belt.

The invention further relates to a method of using the measuring instrument described above.

A particle sample is transported in a particle stream on two or more dosing chutes by means of vibration generators associated with each of the two or more dosing chutes, wherein the computer unit receives signals from the first camera to control the vibration generators so that the particles on the two or more dosing chutes are separated when they fall over an edge of a delivering end of a last dosing chute.

In such a method a first vibration intensity of the first dosing chute and a second vibration intensity of the second dosing chute may be controlled independently of each other to optimize distribution of the particles on the respective dosing chute. Intermediate dosing chute can be controlled in a similar manner by means of intermediate vibration generator attached so respective intermediate dosing chutes.

When the number, thus the density, of particles leaving a first edge of a first delivering end of a first dosing chute is below a predetermined minimum set value, the first vibration intensity of said first dosing chute can be increased by the first vibration generator. When only few particles are left on said first dosing chute, the first dosing chute is emptied at full intensity on all vibration generators.

Other advantages and features of the current invention will be described in more details in the following detailed description with reference to the accompanying drawing in which is shown exemplary embodiments of the invention.
Fig. 1 shows a combined schematic side view of several embodiments of a measuring instrument with two chutes and analysis of particles in accordance with the invention,
Fig. 2 is an extract from fig. 1 of a first embodiment of a measuring instrument according to the invention,
Fig. 3 is an extract from fig. 1 of a second embodiment of a measuring instrument according to the invention, and
Fig. 4 is an extract from fig. 1 of a third embodiment of a measuring instrument according to the invention.

It should be emphasized that although two dosing chute are shown in the figures the measuring instrument according to the present invention may include more than two dosing chutes. Within the scope of the present invention intermediate dosing chutes with associated intermediate vibration generators can be provided between the first dosing chute and the last second dosing chute.

It should further be emphasized that further characteristics, parameters and features than those exemplified above may be derived from the images of the respective cameras. This is a simple matter of provision of software, optionally sensors, e.g. temperature and moisture sensors.

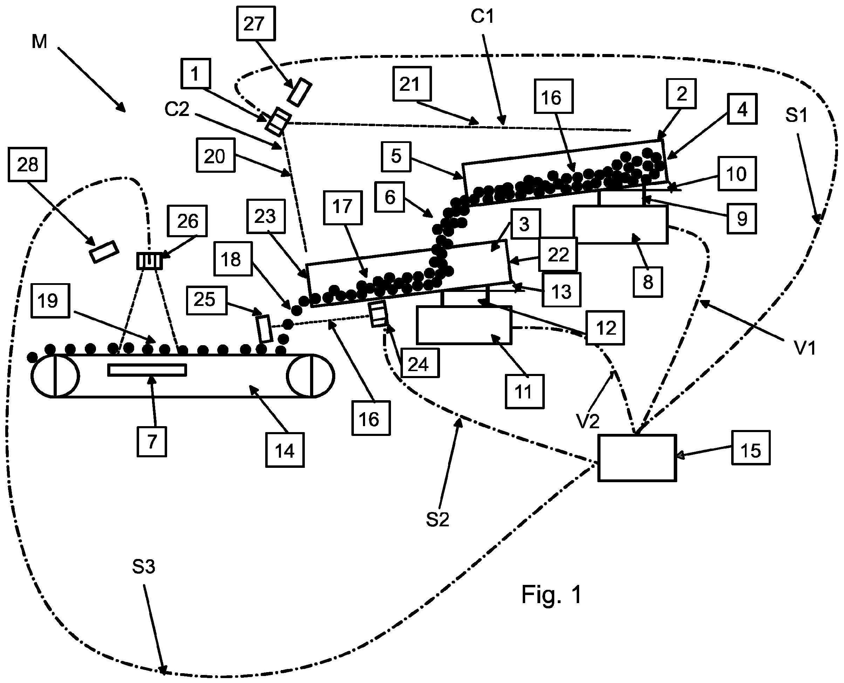

With reference to Fig. 1 is described a measuring instrument M, which, in accordance with the present invention, can control and analyze particles in a particle stream. The measuring instrument M is a camera-based measuring instrument, which is used to control and analyze samples of especially small particles of material such as sugar, seeds, and the like.

The measuring instrument M has a first dosing chute 2, which is formed with a first receiving end 4 and a first delivering end 5, and a next dosing chute 3, which in the present embodiment is the last and second dosing chute 3, has a second receiving end 22 and a second delivering end 23. The first dosing chute area for the first dosing chute 2 and the second dosing chute area for the second dosing chute 3 are illuminated by the first light source 27, as indicated by dotted line C1, at upper vision angle limit 21 of a first camera 1, and dotted line C2, at lower vision angle limit 20 of the first camera 1. The particle densities on said illuminated respective dosing chutes 2,3 are observed by the first camera 1, which is placed above the first dosing chute 2 and above the second dosing chute 3.

The first dosing chute 2 is coupled to a first vibration generator 8 using a first mechanical connection 9. The second dosing chute 3 is coupled to a second vibration generator 11 using a second mechanical connection 12.

The function of the first vibration generator 8 is to facilitate forward movement of a sample of particles 16 on the first dosing chute 2, and by increasing or decreasing the first vibration intensity of the first vibration generator 8, the rate of movement of the sample of particles 16 can be controlled according to the particle density observed by the first camera 1 on any or both of the first dosing chute 2 and second dosing chute 3.

The sample of particles 16 are initially separated on the first dosing chute 2 and then routed such that they fall on the next dosing chute 3 as first separated particles 6. From the next dosing chute 3 the first separated particles 6 are fed as second separated particles 17 to the second delivering end 23 of said next dosing chute 3.

The function of the second vibration generator 11 is to create sufficient forward movement so that the second separated particles 17 are advanced towards the second delivering end 23 of the second dosing chute 3 at a rate causing the second separated particles 17 to separate further before falling as second separated particle 18 off the second edge of the second delivering end 23.

In doing so the second separated particles 17 are then falling to the next stage in the process as second separated particles 18, thus to the particle quality analysis. The density of the second separated particles 18 are lower than the density of the second separated particles 17; the density of the second separated particles 17 are the same or lower than the first separated particles 6; and the density of the first separated particles 6 are lower than the density of the sample of particles 16 on the first dosing chute 2. Thus the distribution of particles increases the closer the particles gets to the second delivering end 23. The increasing separation of the particles 16,6,27,18 is illustrated in the figures by the increasing distance between said particles 16,6,27,18 the closer said particles 16,6,27,18 gets to the second delivering end 23.

So the second separated particles 18 leaves the second delivering end 23 to enter the next stage, which is the analysis stage, in which the second separated particles 18 fall on a conveyor belt 14 and is further spread apart into individual particles 19 due to the movement of the conveyor belt 14; or the second separated particles 18 fall directly through an optical path between a second camera 24 and a second light source 25. The second separated particles 18 is further spread apart in free fall due to gravity to be analyzed as individual particles 18. These two possibilities are both indicated in Fig. 1.

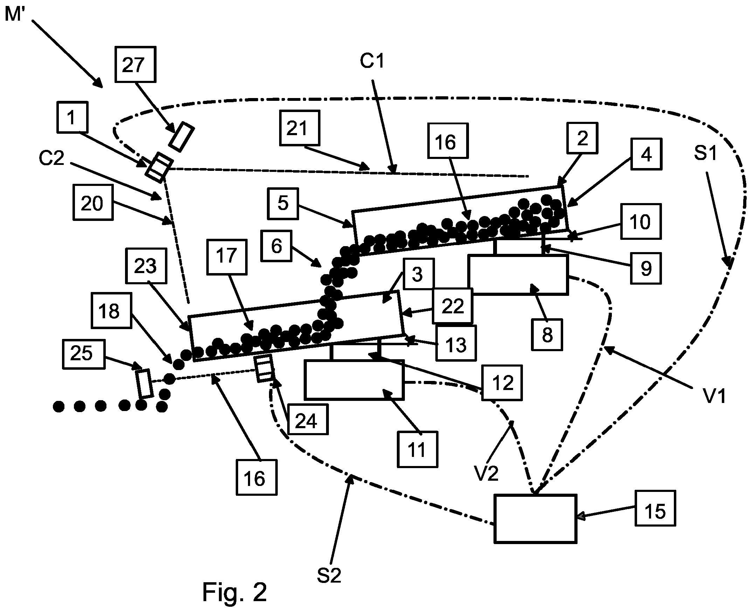

The possibility of analyzing second separated particles 18 in free fall is seen in the first embodiment of a measuring instrument M' shown fig. 2. The first embodiment of a measuring instrument M' utilizes the second camera 24 and the second light source 25 as described above to analyze second separated particles 18 when they are passing through an optical path between the second camera 24 and the second light source 25 due to gravity.

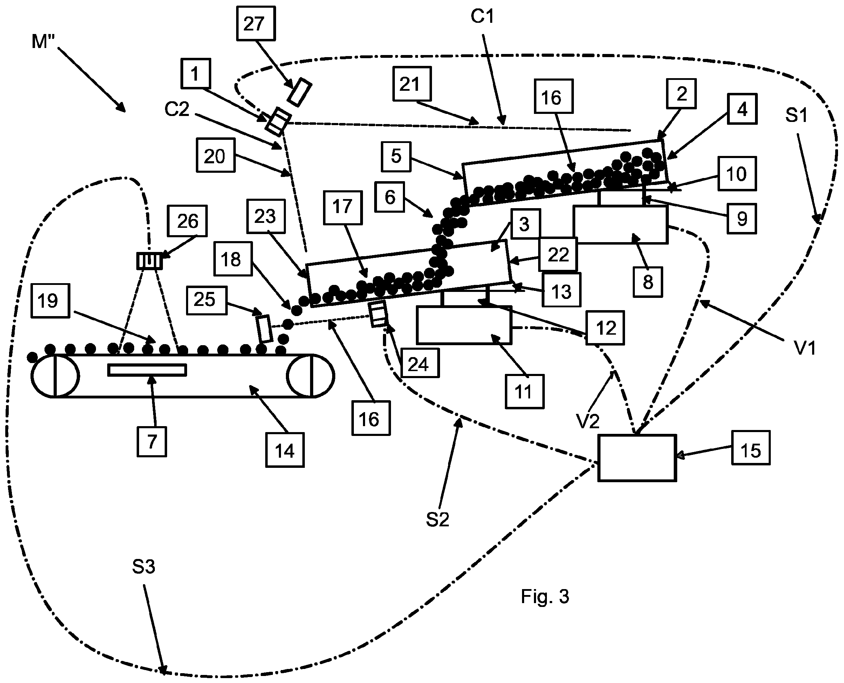

Another possibility is analyzing individual particles 19 on a conveyor belt 14 using the second embodiment of a measuring instrument M'' shown in fig. 3.

For the second embodiment of a measuring instrument M'' individual particles 19 received from the second dosing chute 3 as second separated particles 18 are analyzed while they are transported on a transparent conveyor belt 14. A lower third light source 7 is located under the transparent conveyor belt 14, which lower third light source 7 illuminates the individual particles 19 through the transparent conveyor belt 14 towards a third camera 26 placed above the transparent conveyor belt 14.

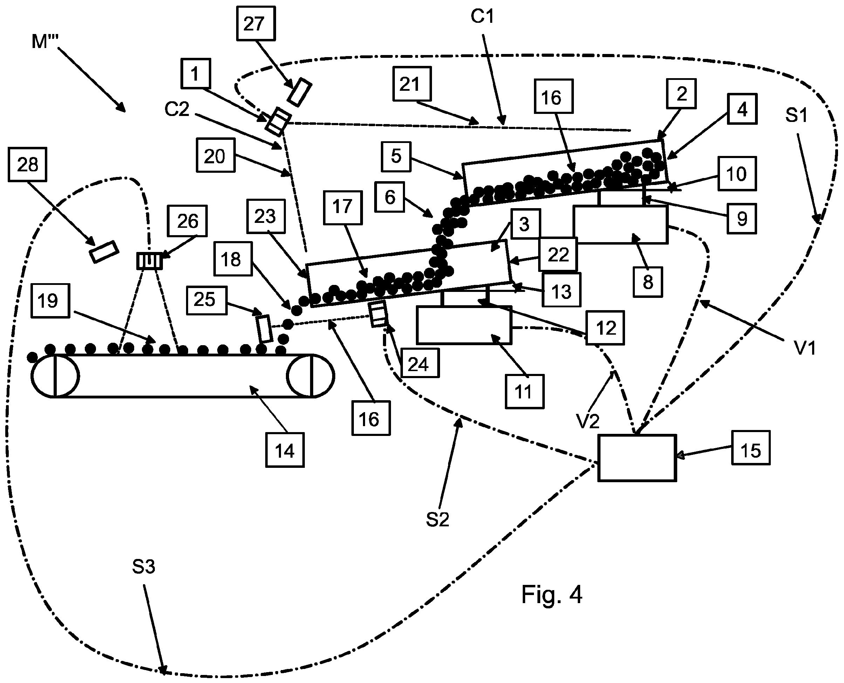

Yet another possibility is analyzing individual particles 19 on a conveyor belt 14 using a third embodiment of a measuring instrument M''', as shown in fig. 4.

The third embodiment of a measuring instrument M''' differs from the second embodiment of a measuring instrument M'' only in that the lower third light source 7 is replaced with an upper third light source 28 located over the conveyor belt 14, which conveyor belt 14 then does not need, but can, be transparent.

As seen in fig. 1 the first camera 1, the second camera 24, the third camera 26, the first vibration generator 8, and the second vibration generator 11 are connected to a computer unit 15, which receives signals from said cameras 1, 24 and 26, as indicated by respective dotted lines S1,S2,S3,V1,V2. In the computer unit 15 the signals from the first camera 1 are analyzed to determine the particle density on the first dosing chute 2 and on the second dosing chute 3, while the signals from the second camera 24 and/or from the third camera 26 are analyzed to determine amongst others the size, quality, type, color, shape, volume, and weight of the individual particles 18,19 depending on the selected embodiment of the measuring instrument.

A particle density analysis of the sample of particles 16 on the first dosing chute 2 is conducted by the computer unit 15 based on signals representing images taken by the first camera 1, which signals, as indicated by dotted arrow S1, is send to the computer unit 15, wherefrom a first control signal, as indicated by dotted line V1, is transmitted to the first vibration generator 8, to set the desired vibration intensity of the first dosing chute 2. In this way, the desired particle density can always achieved.

The particle density on the second dosing chute 3 is also adjusted by the computer unit 15, as indicated by dotted arrow V2 to the second vibration generator 11, so that the second separated particles 17 on the second dosing chute 3 are sufficiently separated into second separated particles 18 before they fall off the second edge of the second delivering end 23 of the second dosing chute 3.

The second vibration generator 11 can run at a constant high intensity but can also be controlled by the signals from the first camera 1 and the computer unit 15, as indicated by dotted lines S1,V2. In the case of a too high particle density of the first separated particles 6 in free fall or individual particles 19 on an analysis area of the conveyor belt 14, the intensity of the first vibration generator 8 is temporarily reduced until the particle density is normalized, thus has reached a predetermined optimal level in which the particle density is below a predefined threshold. Then the vibration intensity of the first vibration generator 8 may be increased again to the first vibration intensity or to any other selected vibration intensity that provides sufficient separation of the particles.

If the particle density of the particles of the sample of particles 16 and the second separated particles 17, as observed by the first camera 1, is too large, there is a risk that the separation of the second separated particles 17 in the subsequent second dosing chute 3 is not sufficient, and thus, there may be overlap of the second separated particles 18 falling off the second edge of the second delivering end 23 of the second dosing chute 3. In this situation, overlapping individual particles 19 on the conveyor belt 14 will give less accurate results.

In the case of persistent overlapping second separated particles 18 and individual particles 19, the analysis of the size, quality, type, and weight will be incorrect, and the result of the analysis becomes worthless.

When the first vibration generator 8 is running at full intensity and no more second separated particles 17 are detected by the first camera 1 on the second dosing chute 3, the first dosing chute 2 is empty and the measuring instrument is ready for the next sample of particles 16.

The first dosing chute 2 has a positive first angle 10 with respect to the horizontal plane so that it drops from the first receiving end 4 to the first delivering end 5. With this configuration, gravity will assist the sample of particles 16 in moving towards the first delivering end 5, but in other configurations, the first angle 10 can be 0° (horizontal) or negative with a slope from the first receiving end 4 to the second delivering end 5.

The second dosing chute 3 has a positive second angle 13 with respect to the horizontal plane so that it drops from the second receiving end 22 to the second delivering end 23. With this configuration, gravity will assist the second separated particles 17 in moving towards the second delivering end 23, but in other configurations, the second angle 13 is 0° (horizontal) or negative with a slope from the receiving end 22 to the delivering end 23.

In its entirety, the invention is a measuring instrument, especially for small and even semi-transparent particles that provide analytical results of bulk goods (small particles) with specific parameters. The results obtained by the measuring instrument, are comparable to, or even better than, the recognized manual methods, which manual methods takes a lot of time and man power and involve the risk of human errors. These specific parameters may include the particle size, quality, type and weight, volume, shape, and color.

The measuring instrument M according to the present invention may include a combination of one or more of the first embodiment of a measuring instrument M', the second embodiment of a measuring instrument M", and the third embodiment of a measuring instrument M‴, as also shown in fig. 1.

The measuring instrument of the present invention is configured for analysis of particles, such as sugar, coffee, seeds, and other small particles. Said measuring instrument comprises two or more dosing chutes, each dosing chute is attached to a vibration generator, which is controlled by signals from a camera above the of the one or more dosing chutes, such as two dosing chutes. If particles of the sample of particles are to be analyzed in free fall, a second camera is placed under the last dosing chute. If particles of the sample of particles are to be analyzed on a conveyor belt a third camera above the conveyor belt is used. If semi-transparent particles are to be analyzed it may be preferred that a lower third light source under a transparent conveyor belt illuminates the individual particles. Signals from the first, second and third cameras are received by a computer unit that analyzes said signals, and from the particle densities measured at and between the first dosing chute and the second dosing chute, and optionally on the conveyor belt, the flow rate of particles in the dosing chutes can be controlled by adjusting the vibration intensity of said dosing chutes, thus by adjusting the vibration intensity of the vibration generators attached to the dosing chutes. The flow rate in the last dosing chute is set high while the previous dosing chute is controlled to achieve a constant flow of particles to the last dosing chute while the conveying speed is adjusted by the separation of the particles as they leave the last dosing chute.

### List of reference numbers

1 first camera
2 first dosing chute
3 second dosing chute
4 first receiving end of first dosing chute
5 first delivering end of first dosing chute
6 first particles in free fall from first dosing chute
7 lower third light source below conveyor belt
8 first vibration generator for first dosing chute
9 first mechanical connection for first dosing chute
10 first angle/slope of inclination of first dosing chute
11 second vibration generator of second dosing chute
12 second mechanical connection of second dosing chute
13 second angle/slope of inclination of second dosing chute
14 Conveyor belt
15 computer unit
16 sample particles on the first dosing chute
17 second particles on the second dosing chute
18 second separated particles in free flow from the second dosing chute
19 individual particles on the conveyor belt
20 lower vision angle limit of first camera
21 upper vision angle limit of first camera
22 second receiving end of second dosing chute
23 second delivering end of second dosing chute
24 second camera
25 second light source
26 third camera
27 first light source
28 upper third light source above conveyor belt

## Claims

1. A measuring instrument (M;M';M";M‴) for controlling the density of particles (16,6,17,18,19) in a particle stream, especially small particles, which measuring instrument (M;M';M";M‴) comprises
- a first dosing chute (2) having a first receiving end (4) and a first delivering end (5), which first dosing chute (2) is attached to a first vibration generator (8),
- a second dosing chute (3) having a second receiving end (22) facing the first delivering end (5) and a second delivering end (23), which second dosing chute (3) is attached to a second vibration generator (11),
- the first dosing chute is placed higher up than the second dosing chute (3) whereby the particles (16) on the first dosing chute (2) can be delivered in free fall from the first delivering end (5) of the first dosing chute (2) to the second dosing chute (3),
- a first light source (27) and a first camera (1),
- a computer unit (15) is connected to the first vibration generator (8), the second vibration generator (11), and the first camera (1) to control a dosing rate of the first dosing chute (2) to the second dosing chute (3) by means of signals from the first camera (1), wherein
- said signals are analyzed by the computer unit (15) to vary the vibration intensity of the first vibration generator (8) and second vibration generator (11), whereby the particle stream (6) that falls over a first edge of the first delivering end (5) of the first dosing chute (2) is controlled so that the particles (17) in the second dosing chute (3) are separated,
**characterised in that**
- the first light source (27) and the first camera (1) are placed above the first dosing chute (2) and the second dosing chute (3), whereby the first camera covers an angle that corresponds to a field of view spanning the first receiving end to the second delivering end.

2. A measuring instrument (M; M' ;M" ;M‴) according to claim 1, **characterised in that** the computer unit (15) is configured to receive signals from the first camera (1) to determine the particle density on the first dosing chute (2), and on the second dosing chute (3), to control the respective first vibration generator (8) and second vibration generator (11).

3. A measuring instrument (M; M' ;M" ;M‴) according to any of the preceding claims, **characterised in** comprising a second camera (24) and a second light source (25) placed below the second dosing chute (3).

4. A measuring instrument (M; M' ;M" ;M‴) according to any of the preceding claims, **characterised in that** the computer unit (15) is configured to receive signals from the second camera (24) and to analyze particles (18) in free fall from a second edge of a second delivering end (23) of the second dosing chute (3) through an optical path between the second camera (24) and the second light source (25).

5. A measuring instrument (M;M'';M‴) according to any of the preceding claims, **characterised in** comprising a conveyor belt (14), a third camera (26) and a third light source (28;7)), wherein the third camera (26) are placed above the conveyor belt (14) and the third light source (28;7) is placed over and/or under the conveyor belt (14).

6. A measuring instrument (M;M'';M''') according to claim 5, **characterised in that** the computer unit (15) is configured to receive signals from the third camera (26) to analyze individual particles on the conveyor belt (14).

7. A measuring instrument (M;M';M";M‴) according to claim 6, **characterised in that** the individual particles (18,19) are analyzed, based on signals from the second camera (24) and/or the third camera (26), by the computer unit (15) to determine one or more of the particle size, the quality, the type, the color, the shape, the volume, and the weight of the individual particles.

8. A measuring instrument (M;M';M";M‴) according to any of the preceding claims, **characterised in that** the first dosing chute (2) has a first slope (10) from the first receiving end (4) to the first delivering end (5) which is downward, horizontal, or upward, and/or the second dosing chute (3) has a second slope (13) from the second receiving end (22) to the second delivering end (23) which is downward, horizontal, or upward.

9. A measuring instrument (M;M';M";M‴) according to any of the preceding claims, **characterised in that** the first dosing chute (2) and the second dosing chute (3) are formed with sides that ensure that the particles (16,17) do not leave the respective dosing chute (2,3) before the particles fall over the first edge of the first delivering end (5) of the first dosing chute (2) and over the second edge of the second delivering end (23) of the second dosing chute (3), respectively; optionally a bottom of a respective first dosing chute (2) or second dosing chute (3) is concave, convex, or flat.

10. A measuring instrument (M;M';M";M‴) according to any of the preceding claims, **characterised in** comprising more than two dosing chutes (2,3), wherein each dosing chute following a previous dosing chute is running at a higher or equal vibration intensity than the dosing chute from which it is receiving particles.

11. A measuring instrument (M;M';M";M‴) according to any of the preceding claims, **characterised in that** the second dosing chute (3) has a high vibration intensity in view of the rate of advance of particles on the previous first chute (2).

12. A measuring instrument (M;M';M";M‴) according to any of the preceding claims, **characterised in that** the first camera (1) has a field of view angle spanning the first receiving end (4) to the second delivering end (23).

13. A method of using the measuring instrument (M;M';M";M‴) according to any of the preceding claims, **characterised in that** a sample of particles (16) is transported in a particle stream on two or more dosing chutes (2,3) by means of vibration generators (8,11) associated with each of the two or more dosing chutes (2,3), wherein the computer unit (15) receives signals from the first camera (1) to control the vibration generators (8,11) so that the particles (15,17) on the two or more dosing chutes (2,3) are separated when they fall over an edge of a delivering end (23) of a last dosing chute (3).

14. A method according to claim 13, **characterised in that** a first vibration intensity of the first dosing chute (2) and a second vibration intensity of the second dosing chute (3) are controlled independently.

15. A method according to any of claims 13 or 14, **characterised in that** when the density of particles (6) leaving a first edge of a first delivering end (5) of a first dosing chute (2) is below a predetermined minimum set value, the first vibration intensity of said first dosing chute (2) is increased by the first vibration generator (8), and when only few particles are left on the first dosing chute (2), said first dosing chute (2) is emptied at full intensity on all vibration generators.

## Patentansprüche

1. Messinstrument (M; M'; M"; M‴) zum Kontrollieren der Dichte von Partikeln (16, 6, 17, 18, 19) in einem Partikelstrom, insbesondere kleinen Partikeln, wobei das Messinstrument (M; M'; M"; M"') umfasst
- eine erste Dosierrutsche (2) mit einem ersten Aufnahmeende (4) und einem ersten Abgabeende (5), wobei die erste Dosierrutsche (2) an einem ersten Vibrationsgenerator (8) befestigt ist,
- eine zweite Dosierrutsche (3) mit einem zweiten Aufnahmeende (22), das dem ersten Abgabeende (5) zugewandt ist, und einem zweiten Abgabeende (23), wobei die zweite Dosierrutsche (3) an einem zweiten Vibrationsgenerator (11) befestigt ist,
- wobei die erste Dosierrutsche höher als die zweite Dosierrutsche (3) platziert ist, wodurch die Partikel (16) auf der ersten Dosierrutsche (2) im freien Fall vom ersten Abgabeende (5) der ersten Dosierrutsche (2) zur zweiten Dosierrutsche (3) abgegeben werden können,
- eine erste Lichtquelle (27) und eine erste Kamera (1),
- eine Computereinheit (15) mit dem ersten Vibrationsgenerator (8), dem zweiten Vibrationsgenerator (11) und der ersten Kamera (1) verbunden ist, um eine Dosierrate der ersten Dosierrutsche (2) zur zweiten Dosierrutsche (3) mittels Signalen von der ersten Kamera (1) zu kontrollieren, wobei
- die Signale von der Computereinheit (15) analysiert werden, um die Vibrationsintensität des ersten Vibrationsgenerators (8) und des zweiten Vibrationsgenerators (11) zu variieren, wodurch der Partikelstrom (6), der über eine erste Kante des ersten Abgabeendes (5) der ersten Dosierrutsche (2) fällt, so gesteuert wird, dass die Partikel (17) in der zweiten Dosierrutsche (3) getrennt werden,
**dadurch gekennzeichnet, dass**
- die erste Lichtquelle (27) und die erste Kamera (1) über der ersten Dosierrutsche (2) und der zweiten Dosierrutsche (3) platziert sind, wodurch die erste Kamera einen Winkel abdeckt, der einem Sichtfeld entspricht, das das erste Aufnahmeende bis zum zweiten Abgabeende überspannt.

2. Messinstrument (M; M'; M"; M"') nach Anspruch 1, **dadurch gekennzeichnet, dass** die Computereinheit (15) konfiguriert ist, um Signale von der ersten Kamera (1) zu empfangen, um die Partikeldichte auf der ersten Dosierrutsche (2) und auf der zweiten Dosierrutsche (3) zu bestimmen, um den jeweiligen ersten Vibrationsgenerator (8) und zweiten Vibrationsgenerator (11) zu steuern.

3. Messinstrument (M; M'; M"; M‴) nach einem der vorhergehenden Ansprüche, **dadurch gekennzeichnet, dass** es eine zweite Kamera (24) und eine zweite Lichtquelle (25) umfasst, die unter der zweiten Dosierrutsche (3) platziert sind.

4. Messinstrument (M; M'; M"; M‴) nach einem der vorhergehenden Ansprüche, **dadurch gekennzeichnet, dass** die Computereinheit (15) konfiguriert ist, um Signale von der zweiten Kamera (24) zu empfangen und Partikel (18) im freien Fall von einer zweiten Kante eines zweiten Abgabeendes (23) der zweiten Dosierrutsche (3) durch einen optischen Pfad zwischen der zweiten Kamera (24) und der zweiten Lichtquelle (25) zu analysieren.

5. Messinstrument (M; M"; M"') nach einem der vorhergehenden Ansprüche, **dadurch gekennzeichnet, dass** es ein Förderband (14), eine dritte Kamera (26) und eine dritte Lichtquelle (28; 7) umfasst, wobei die dritte Kamera (26) über dem Förderband (14) platziert ist und die dritte Lichtquelle (28; 7) über und/oder unter dem Förderband (14) platziert ist.

6. Messinstrument (M; M"; M‴) nach Anspruch 5, **dadurch gekennzeichnet, dass** die Computereinheit (15) konfiguriert ist, um Signale von der dritten Kamera (26) zu empfangen, um einzelne Partikel auf dem Förderband (14) zu analysieren.

7. Messinstrument (M; M'; M"; M"') nach Anspruch 6, **dadurch gekennzeichnet, dass** die einzelnen Partikel (18, 19) basierend auf Signalen von der zweiten Kamera (24) und/oder der dritten Kamera (26) durch die Computereinheit (15) analysiert werden, um eines oder mehrere von der Partikelgröße, der Qualität, dem Typ, der Farbe, der Form, dem Volumen und dem Gewicht der einzelnen Partikel zu bestimmen.

8. Messinstrument (M; M'; M"; M"') nach einem der vorhergehenden Ansprüche, **dadurch gekennzeichnet, dass** die erste Dosierrutsche (2) eine erste Neigung (10) von dem ersten Aufnahmeende (4) zu dem ersten Abgabeende (5) aufweist, die nach unten, horizontal oder nach oben verläuft, und/oder die zweite Dosierrutsche (3) eine zweite Neigung (13) von dem zweiten Aufnahmeende (22) zu dem zweiten Abgabeende (23) aufweist, die nach unten, horizontal oder nach oben verläuft.

9. Messinstrument (M; M'; M"; M"') nach einem der vorhergehenden Ansprüche, **dadurch gekennzeichnet, dass** die erste Dosierrutsche (2) und die zweite Dosierrutsche (3) mit Seiten ausgebildet sind, die sicherstellen, dass die Partikel (16, 17) die jeweilige Dosierrutsche (2, 3) nicht verlassen, bevor die Partikel über die erste Kante des ersten Abgabeendes (5) der ersten Dosierrutsche (2) bzw. über die zweite Kante des zweiten Abgabeendes (23) der zweiten Dosierrutsche (3) fallen; optional ist ein Boden einer jeweiligen ersten Dosierrutsche (2) oder zweiten Dosierrutsche (3) konkav, konvex oder flach.

10. Messinstrument (M; M'; M"; M‴) nach einem der vorhergehenden Ansprüche, **dadurch gekennzeichnet, dass** es mehr als zwei Dosierrutschen (2, 3) umfasst, wobei jede Dosierrutsche, die einer vorherigen Dosierrutsche folgt, mit einer höheren oder gleichen Vibrationsintensität läuft als die Dosierrutsche, von der sie Partikel aufnimmt.

11. Messinstrument (M; M'; M"; M‴) nach einem der vorhergehenden Ansprüche, **dadurch gekennzeichnet, dass** die zweite Dosierrutsche (3) eine hohe Vibrationsintensität im Hinblick auf die Vorschubrate von Partikeln auf der vorherigen ersten Rutsche (2) aufweist.

12. Messinstrument (M; M'; M"; M‴) nach einem der vorhergehenden Ansprüche, **dadurch gekennzeichnet, dass** die erste Kamera (1) einen Sichtfeldwinkel aufweist, der das erste Aufnahmeende (4) bis zum zweiten Abgabeende (23) überspannt.

13. Verfahren zur Verwendung des Messinstruments (M; M'; M"; M"') nach einem der vorhergehenden Ansprüche, **dadurch gekennzeichnet, dass** eine Probe von Partikeln (16) in einem Partikelstrom auf zwei oder mehr Dosierrutschen (2, 3) mittels Vibrationsgeneratoren (8, 11) transportiert wird, die jeder der zwei oder mehr Dosierrutschen (2, 3) zugeordnet sind, wobei die Computereinheit (15) Signale von der ersten Kamera (1) empfängt, um die Vibrationsgeneratoren (8, 11) so zu steuern, dass die Partikel (15, 17) auf den zwei oder mehr Dosierrutschen (2, 3) getrennt werden, wenn sie über eine Kante eines Abgabeendes (23) einer letzten Dosierrutsche (3) fallen.

14. Verfahren nach Anspruch 13, **dadurch gekennzeichnet, dass** eine erste Vibrationsintensität der ersten Dosierrutsche (2) und eine zweite Vibrationsintensität der zweiten Dosierrutsche (3) unabhängig gesteuert werden.

15. Verfahren nach einem der Ansprüche 13 oder 14, **dadurch gekennzeichnet, dass**, wenn die Dichte von Partikeln (6), die eine erste Kante eines ersten Abgabeendes (5) einer ersten Dosierrutsche (2) verlassen, unter einem vorbestimmten Mindestsollwert liegt, die erste Vibrationsintensität der ersten Dosierrutsche (2) durch den ersten Vibrationsgenerator (8) erhöht wird, und wenn nur wenige Partikel auf der ersten Dosierrutsche (2) zurückgelassen werden, die erste Dosierrutsche (2) bei voller Intensität auf allen Vibrationsgeneratoren entleert wird.

## Revendications

1. Un instrument de mesure (M; M' ; M" ; M‴ ) pour contrôler la densité des particules (16,6,17,18,19) dans un flux de particules, en particulier les petites particules, lequel instrument de mesure (M; M' ; M" ; M‴ ) comprend
- une première goulotte de dosage (2) ayant une première extrémité de réception (4) et une première extrémité de livraison (5), laquelle première goulotte de dosage (2) est attachée à un premier générateur de vibrations (8),
- une deuxième goulotte de dosage (3) ayant une deuxième extrémité de réception (22) faisant face à la première extrémité de livraison (5) et une deuxième extrémité de livraison (23), laquelle deuxième goulotte de dosage (3) est attachée à un deuxième générateur de vibrations (11),
- la première goulotte de dosage est placée plus haut que la deuxième goulotte de dosage (3) permettant ainsi aux particules (16) sur la première goulotte de dosage (2) de tomber en chute libre de la première extrémité de livraison (5) de la première goulotte de dosage (2) vers la deuxième goulotte de dosage (3),
- une première source de lumière (27) et une première caméra (1),
- une unité informatique (15) est connectée au premier générateur de vibrations (8), au deuxième générateur de vibrations (11), et à la première caméra (1) pour contrôler un taux de dosage de la première goulotte de dosage (2) vers la deuxième goulotte de dosage (3) au moyen de signaux provenant de la première caméra (1), dans lequel
- lesdits signaux sont analysés par l'unité informatique (15) pour varier l'intensité de vibration du premier générateur de vibrations (8) et du deuxième générateur de vibrations (11), permettant ainsi de contrôler le flux de particules (6) qui tombe sur un premier bord de la première extrémité de livraison (5) de la première goulotte de dosage (2) de sorte que les particules (17) dans la deuxième goulotte de dosage (3) soient séparées,
**caractérisé en ce que**
- la première source de lumière (27) et la première caméra (1) sont placées au-dessus de la première goulotte de dosage (2) et de la deuxième goulotte de dosage (3), permettant ainsi à la première caméra de couvrir un angle qui correspond à un champ de vision s'étendant de la première extrémité de réception à la deuxième extrémité de livraison.

2. Un instrument de mesure (M; M' ; M" ; M‴ ) selon la revendication 1, **caractérisé en ce que** l'unité informatique (15) est configurée pour recevoir des signaux de la première caméra (1) afin de déterminer la densité des particules sur la première goulotte de dosage (2), et sur la deuxième goulotte de dosage (3), pour contrôler respectivement le premier générateur de vibrations (8) et le deuxième générateur de vibrations (11).

3. Un instrument de mesure (M; M' ; M" ; M‴ ) selon l'une quelconque des revendications précédentes, **caractérisé en ce qu'**il comprend une deuxième caméra (24) et une deuxième source de lumière (25) placées en dessous de la deuxième goulotte de dosage (3).

4. Un instrument de mesure (M; M' ; M" ; M‴ ) selon l'une quelconque des revendications précédentes, **caractérisé en ce que** l'unité informatique (15) est configurée pour recevoir des signaux de la deuxième caméra (24) et analyser les particules (18) en chute libre d'un deuxième bord d'une deuxième extrémité de livraison (23) de la deuxième goulotte de dosage (3) à travers un chemin optique entre la deuxième caméra (24) et la deuxième source de lumière (25).

5. Un instrument de mesure (M; M" ; M‴) selon l'une quelconque des revendications précédentes, **caractérisé en ce qu'**il comprend une bande transporteuse (14), une troisième caméra (26) et une troisième source de lumière (28;7), dans lequel la troisième caméra (26) est placée au-dessus de la bande transporteuse (14) et la troisième source de lumière (28;7) est placée au-dessus et/ou en dessous de la bande transporteuse (14).

6. Un instrument de mesure (M ; M" ; M‴) selon la revendication 5, **caractérisé en ce que** l'unité informatique (15) est configurée pour recevoir des signaux de la troisième caméra (26) afin d'analyser les particules individuelles sur la bande transporteuse (14).

7. Un instrument de mesure (M; M' ; M" ; M‴) selon la revendication 6, **caractérisé en ce que** les particules individuelles (18,19) sont analysées, sur la base des signaux de la deuxième caméra (24) et/ou de la troisième caméra (26), par l'unité informatique (15) afin de déterminer une ou plusieurs des caractéristiques suivantes : la taille des particules, la qualité, le type, la couleur, la forme, le volume et le poids des particules individuelles.

8. Un instrument de mesure (M; M' ; M" ; M‴) selon l'une quelconque des revendications précédentes, **caractérisé en ce que** la première goulotte de dosage (2) a une première pente (10) de la première extrémité de réception (4) à la première extrémité de livraison (5) qui est descendante, horizontale ou ascendante, et/ou la deuxième goulotte de dosage (3) a une deuxième pente (13) de la deuxième extrémité de réception (22) à la deuxième extrémité de livraison (23) qui est descendante, horizontale ou ascendante.

9. Un instrument de mesure (M; M' ; M" ; M‴) selon l'une quelconque des revendications précédentes, **caractérisé en ce que** la première goulotte de dosage (2) et la deuxième goulotte de dosage (3) sont formées avec des côtés qui assurent que les particules (16,17) ne quittent pas la goulotte de dosage respective (2,3) avant que les particules ne tombent sur le premier bord de la première extrémité de livraison (5) de la première goulotte de dosage (2) et sur le deuxième bord de la deuxième extrémité de livraison (23) de la deuxième goulotte de dosage (3), respectivement; éventuellement, un fond de la première goulotte de dosage (2) ou de la deuxième goulotte de dosage (3) est concave, convexe ou plat.

10. Un instrument de mesure (M; M' ; M" ; M‴) selon l'une quelconque des revendications précédentes, **caractérisé en ce qu'**il comprend plus de deux goulottes de dosage (2,3), dans lequel chaque goulotte de dosage suivant une goulotte de dosage précédente fonctionne à une intensité de vibration supérieure ou égale à celle de la goulotte de dosage dont elle reçoit les particules.

11. Un instrument de mesure (M; M' ; M" ; M‴) selon l'une quelconque des revendications précédentes, **caractérisé en ce que** la deuxième goulotte de dosage (3) a une intensité de vibration élevée en vue du taux d'avancement des particules sur la première goulotte (2) précédente.

12. Un instrument de mesure (M; M' ; M" ; M‴) selon l'une quelconque des revendications précédentes, **caractérisé en ce que** la première caméra (1) a un angle de champ de vision couvrant de la première extrémité de réception (4) à la deuxième extrémité de livraison (23).

13. Un procédé d'utilisation de l'instrument de mesure (M; M' ; M" ; M‴) selon l'une quelconque des revendications précédentes, **caractérisé en ce qu'**un échantillon de particules (16) est transporté dans un flux de particules sur deux ou plusieurs goulottes de dosage (2,3) au moyen de générateurs de vibrations (8,11) associés à chacune des deux ou plusieurs goulottes de dosage (2,3), dans lequel l'unité informatique (15) reçoit des signaux de la première caméra (1) pour contrôler les générateurs de vibrations (8,11) de sorte que les particules (15,17) sur les deux ou plusieurs goulottes de dosage (2,3) soient séparées lorsqu'elles tombent sur un bord d'une extrémité de livraison (23) d'une dernière goulotte de dosage (3).

14. Un procédé selon la revendication 13, **caractérisé en ce qu'**une première intensité de vibration de la première goulotte de dosage (2) et une deuxième intensité de vibration de la deuxième goulotte de dosage (3) sont contrôlées indépendamment.

15. Un procédé selon l'une quelconque des revendications 14 ou 15, **caractérisé en ce que** lorsque la densité des particules (6) quittant un premier bord d'une première extrémité de livraison (5) d'une première goulotte de dosage (2) est inférieure à une valeur minimale prédéterminée, la première intensité de vibration de ladite première goulotte de dosage (2) est augmentée par le premier générateur de vibrations (8), et lorsque seules quelques particules restent sur la première goulotte de dosage (2), ladite première goulotte de dosage (2) est vidée à pleine intensité sur tous les générateurs de vibrations.
